# EUROPÄISCHE PATENTSCHRIFT

(11) **EP 3 323 298 B1**
(45) Veröffentlichungstag und Bekanntmachung des Hinweises auf die Patenterteilung: **27.03.2019**
(21) Anmeldenummer: 17210666.8
(22) Anmeldetag: 13.12.2016
(51) Int. Cl.: A23L 5/43, A23L 5/47

(54) **PULVERFÖRMIGE EIERFÄRBEMITTELZUSAMMENSETZUNG**
POWDERY COMPOSITION FOR COLORING EGGS
COMPOSITION SOUS FORME DE POUDRE POUR COLORER DES OEUX

(30) Priorität: 23.12.2015 DE 102015122672
(43) Veröffentlichungstag der Anmeldung: 23.05.2018
(62) Teilanmeldung aus: 16203594.3
(73) Patentinhaber: Brauns-Heitmann GmbH & Co. KG, 34414 Warburg (DE)
(72) Erfinder: Füser, Katja, 59602 Rüthen (DE); Gibbels, Dr. Uwe, 34414 Warburg (DE); Wieczorek, Maria, 34434 Borgenstreich (DE)
(74) Vertreter: Geskes, Christoph

(56) Entgegenhaltungen:
- DATABASE WPI Week 201171 Thomson Scientific, London, GB; AN 2011-L85533 XP002778041, -& CN 102 160 856 A (NANJING YIHAI BIOTECHNOLOGY CO LTD) 24. August 2011 (2011-08-24)

## Beschreibung

Die vorliegende Erfindung betrifft eine pulverförmige Eierfärbemittelzusammensetzung.

Das Färben von Eiern ist weitverbreitet, insbesondere zum Osterfest werden Eier gefärbt. Auch im Kunsthandwerk ist das Färben von Eiern üblich. Eier werden insbesondere im gekochten Zustand oder aber ausgelassen, das heißt nur die Schale, mit Farben behandelt.

Aus dem Stand der Technik sind Techniken und Verfahren zum Färben von Eiern bekannt. Üblicherweise werden Eier zum Färben in ein Farbbad gegeben und in diesem erhitzt. Dies bietet den Vorteil des gleichzeitigen Kochens und Färbens der Eier. Hierzu werden die Eier in einen Topf mit üblicherweise kaltem Wasser gelegt, so dass die Eier bedeckt sind. In das Wasser wird die gewünschte Eierfarbe gegeben und das Färbebad erhitzt. Sobald das Wasser siedet, lässt man das Färbebad mit den Eiern weiterkochen, bis die Eier in der Regel hartgekocht sind, also etwa 6 bis 10 Minuten. Anschließend wird das Färbebad mit kaltem Wasser ausgespült und die gefärbten Eier werden zum Trocknen abgelegt. Dieses Färbeverfahren funktioniert mit Lebensmittelfarbstoffen.

DE 10 2009 038 394 A1 offenbar ein Eierfärbeverfahren, mit welchem gleichzeitig intensive als auch wasserbeständige Farbeffekte auf einer Eierschale erzeugt werden können. Dabei werden lösliche Lebensmittelfarben eingesetzt, die alkoholbasiert sind. Selbige werden über ein flächiges Material auf ein Ei übertragen. Zur Übertragung der alkoholbasierten Färbemittel werden dabei Trägerstoffe eingesetzt, insbesondere Schellack und/oder Kopal.

Naturfarbstoffe werden in Eierfärbezusammensetzungen in erster Linie angeboten für Eierfärbeverfahren, die in der Hitze stattfinden, wie oben beschrieben.

Gleich welches Färbeverfahren eingesetzt wird, besteht stets auf Seiten der färbenden Personen der Wunsch, ein Ei möglichst gleichmäßig zu färben, das heißt ein möglichst einheitliches, homogenes Färbebild auf dem Ei zu erzeugen. Gleichwohl ist mit den bekannten Eierfärbeverfahren aus dem Stand der Technik solches nicht möglich, üblicherweise weist ein gefärbtes Ei helle Sprenkel oder Ungleichmäßigkeiten im Farbauftrag zumindest in einem gewissen Ausmaß auf.

US 2014/128407 A1 offenbart eine schnelllösende Azaperon-Granulat-Zusammensetzung und damit eine Neuroleptika-Zusammensetzung umfassend unter anderem auch Lactose-Monohydrat, Zitronensäure und Brillantblau. DE 1 298 237 B offenbart ein Verfahren zur Herstellung von Tabletten aus therapeutischem, gepulvertem Material ohne vorheriges Granulieren und dabei eine Zusammensetzung für eine Vitamintablette zum Zerkauen, die unter anderem auch Sorbit, Ascorbinsäure und Riboflavin-5'-Phosphat umfasst. US 2012/0045563 A1 betrifft eine Resveratrol und damit ein Phytoalexin aufweisende Zusammensetzung, die unter anderem auch Sorbit, Ascorbinsäure, Zitronensäure und Riboflavin-5'-Phosphat umfasst. DE 602 18 744 T2 offenbart eine partikuläre Zusammensetzung enthaltend eine lipophile Flüssigkeit zur Herstellung von Tabletten, die unter anderem auch Saccharose, Zitronensäure und Brillantblau umfasst.

Aufgabe der vorliegenden Erfindung ist es daher, eine Eierfärbemittelzusammensetzung zur Verfügung zu stellen, mit welcher ein gleichmäßigeres, homogeneres Färbebild bei der Färbung von Eiern erhalten wird.

Diese Aufgabe wird gelöst durch eine pulverförmige Eierfärbemittelzusammensetzung umfassend mindestens einen Farbstoff ausgewählt aus einer Gruppe umfassend Riboflavin-5'-Phosphat, Karmin, Brilliantblau FCF und/oder Patentblau V in einer Menge in einem Bereich von etwa 0,8 Gew.-% bis etwa 15 Gew.-%, bezogen auf die Gesamtmenge der Zusammensetzung; mindestens eine Säure ausgewählt aus einer Gruppe umfassend Zitronensäure in einer Menge in einem Bereich von etwa 25 Gew.-% bis etwa 50 Gew.-%, bezogen auf die Gesamtmenge der erfindungsgemäßen Eierfärbemittelzusammensetzung, Äpfelsäure, Weinsäure, Dehydroascorbinsäure und/oder Ascorbinsäure; sowie Saccharose als Zucker in einer Menge in einem Bereich von etwa 25 Gew.-% bis etwa 94 Gew.-%, bevorzugt in einer Menge in einem Bereich von etwa 30 Gew-% bis etwa 91 Gew.-%, weiter bevorzugt in einem Bereich von etwa 50 Gew.-% bis etwa 91 Gew.-%, noch weiter bevorzugt in einem Bereich von etwa 55 Gew.-% bis etwa 91 Gew.-%, jeweils bezogen auf die Gesamtmenge der Zusammensetzung.

Die erfindungsgemäße pulverförmige Eierfärbemittelzusammensetzung ist aufgrund ihrer pulverförmigen Eigenschaft einfach einsetzbar und handelbar, sei es in Form von Pulvern, aus dem Pulver gepressten Tabletten oder ähnlichem. Die Lagerung ist erheblich vereinfacht im Gegensatz zu wässerigen Eierfärbemittelzusammensetzungen, da die erfindungsgemäße pulverförmige Eierfärbemittelzusammensetzung ein geringeres Volumen aufweist. Außerdem ist keine Konservierung erforderlich, Konservierungsmittel können dadurch eingespart werden. Wird die erfindungsgemäße pulverförmige Eierfärbemittelzusammensetzung eingesetzt, wird diese vorzugsweise mit einer gewissen Menge Wasser angesetzt, in welcher Lösung bevorzugt in der Kälte, das heißt bei Raumtemperaturen (20°C bzw. 25°C), Eier gefärbt werden können. Die erfindungsgemäße pulverförmige Eierfärbemittelzusammensetzung ist damit eine solche, welche vorzugsweise für Kaltfärbeverfahren einsetzbar ist. Vorteilhafterweise weisen mit der erfindungsgemäßen pulverförmigen Eierfärbemittelzusammensetzung gefärbte Eier zumindest eine verringerte Anzahl heller Sprenkel als auch ein gleichmäßigeres Färbebild auf als Eier, die mit den aus dem Stand der Technik bekannten Eierfärbemittelzusammensetzungen, insbesondere in Kaltfärbeverfahren gefärbt wurden. Dies dürfte zurückzuführen sein auf den zusätzlichen Einsatz mindestens eines Zuckers in den beanspruchten Gewichtsprozentbereichen. Die Oberfläche eines mit einer erfindungsgemäßen pulverförmigen Eierfärbemittelzusammensetzung in wässeriger Lösung gefärbten Eies zeigt erkennbar weniger helle Sprenkel als bei einer Färbung mit einer Färbezusammensetzung ohne Zuckerzusatz. Bevorzugt enthält die Färbemittelzusammensetzung mindestens einen Farbstoff, mindestens eine Säure, mindestens einen Zucker, als auch ggf. mindestens ein Sprühhilfsmittel und/oder ein Abfüllhilfsmittel. Bei dieser bevorzugten Zusammensetzung wurden der erfindungsgemäße Farbstoff, der erfindungsgemäße Zucker und die erfindungsgemäße Säure eingesetzt; die Zucker zudem in den erfindungsgemäßen Bereichen.

Soweit in den Ansprüchen und in der Beschreibung der vorliegenden Erfindung der Begriff "etwa" verwendet wird, so ist hierdurch für den angesprochenen Fachmann ersichtlich, dass die genannten Bereichsgrenzen oder Werte keine starren Grenzen sind, sondern vielmehr durch auch geringfügige Abweichungen noch Ziel und Zweck der vorliegenden Erfindung erfüllt wird. Insbesondere sind Abweichungen von +/- 10%, bevorzugt +/- 5%, weiter bevorzugt+/- 2%, von den angegebenen Bereichsgrenzen beziehungsweise -werten solche, welche in den Schutzbereich der vorliegenden Erfindung fallen.

Vorzugsweise ist der mindestens eine Farbstoff in einer Menge in einem Bereich von etwa 0,8 Gew.-% bis etwa 12 Gew.-%, bezogen jeweils auf die Gesamtmenge der Zusammensetzung, von der erfindungsgemäßen Zusammensetzung umfasst. Diese Farbstoffe werden in aller Regel als Mischung (Pulver) zur Verfügung gestellt, beispielsweise 50%ig oder 85%ig, beinhalten also in diesen Beispielen 50% oder 85% des Farbstoffes. Auf diese prozentuale Menge für den Farbstoff wird bei der Ermittlung der Gew.-%-Werte abgestellt, soweit nicht ausdrücklich anderes angegeben ist.

Der Farbstoff Riboflavin-5'-Phosphat, der als mindestens ein Farbstoff in der erfindungsgemäßen pulverförmigen Eierfärbemittelzusammensetzung eingesetzt ist, ist auch unter dem Namen Flavinmononukleotid beziehungsweise Riboflavin-5'-(dihydrogenphoshat) bekannt, und leitet sich von Vitamin B₂ ab. In der Europäischen Union ist dieser Farbstoff unter der Nummer E101 ii als Natriumsalz zum Zeitpunkt der vorliegenden Erfindung zugelassen. Er wird unter der CAS-Nummer 130-40-5 geführt. Dieser Farbstoff wird als gelber Farbstoff allein oder in Mischung mit anderen Farbstoffen zur Eierfärbung erfindungsgemäß eingesetzt. Wenn eine Färbung von Eiern in gelb gewünscht ist, wird bevorzugt Riboflavin-5'-Phosphat in einer Menge in einem Bereich von etwa 2,5 Gew.-% bis etwa 6 Gew.-%, weiter bevorzugt in einer Menge in einem Bereich von 3,3 Gew.-% bis etwa 4,7 Gew.-%, jeweils bezogen auf die Gesamtmenge der erfindungsgemäßen Zusammensetzung, eingesetzt. Darüber hinaus wird Riboflavin-5'-Phosphat auch eingesetzt, um eine rote, grüne beziehungsweise orange Färbung von Eiern zu erhalten. Dabei wird Riboflavin-5'-Phosphat in Mischungen mit anderen Farbstoffen eingesetzt. Der Einsatz von Riboflavin-5'-Phosphat erfolgt in diesen Mischungen ebenfalls in Gewichtsprozentbereichen wie vorstehend genannt.

Karmin als mindestens ein Farbstoff, der in der erfindungsgemäßen pulverförmigen Eierfärbemittelzusammensetzung einsetzbar ist, ist ein organischer roter Farbstoff, in der Regel in Form von Calcium- und/oder Aluminiumsalzen der Karminsäure. Er ist ein natürlicher Farbstoff und wird insbesondere aus Cochenilleschildläusen gewonnen. Er ist in der Europäischen Union zum Zeitpunkt der Vornahme der vorliegenden Patentanmeldung unter der Bezeichnung E120 zugelassen. Er wird unter der CAS-Nummer 1390-65-4 geführt. Karmin wird insbesondere eingesetzt, um Eier im Farbton Rot zu färben, in Mischungen mit anderen Farbstoffen jedoch auch zur Erzeugung anderer Farbtöne, wie insbesondere orange oder violett. Soweit Karmin, bevorzugt in einer 50%igen Mischung in Pulverform, in der erfindungsgemäßen pulverförmigen Eierfärbemittelzusammensetzung eingesetzt ist, wird es vorzugsweise in einer Menge in einem Bereich von etwa 0,2 Gew.-% bis etwa 10 Gew.-%, bezogen auf die Gesamtmenge der pulverförmigen Eierfärbemittelzusammensetzung, eingesetzt. Soweit Karmin als alleiniger Farbstoff zur Färbung von Eiern mit der Farbe Rot in der erfindungsgemäßen pulverförmigen Eierfärbemittelzusammensetzung eingesetzt ist, wird dieser in einer Menge in einem Bereich von etwa 2 Gew.-% bis etwa 10 Gew.-%, bezogen auf die Gesamtmenge der Eierfärbemittelzusammensetzung, eingesetzt. Soweit Karmin zusammen mit einem anderen Farbstoff zur Erzeugung einer roten Färbung von Eiern eingesetzt wird, bevorzugt mit Riboflavin-5'-Phosphat, wird Karmin eingesetzt in einer Menge in einem Bereich von etwa 2 Gew.-% bis etwa 10 Gew.-%, weiter bevorzugt in einer Menge in einem Bereich von etwa 3 Gew.-% bis etwa 8 Gew.-%, jeweils bezogen auf die Gesamtmenge der erfindungsgemäßen Eierfärbemittelzusammensetzung, eingesetzt. Soweit Karmin eingesetzt wird zur Erzeugung einer orangen Färbung von Eiern, erfolgt dies vorzugsweise in einer Mischung zusammen mit Riboflavin-5'-Phosphat, wobei Karmin in einer Menge in einem Bereich von etwa 0,1 Gew.-% bis etwa 1,2 Gew.-%, weiter bevorzugt in einer Menge in einem Bereich von etwa 0,2 Gew.-% bis etwa 1 Gew.-%, jeweils bezogen auf die Gesamtmenge der erfindungsgemäßen Zusammensetzung, von dieser umfasst ist. Soweit Karmin eingesetzt wird zur Erzeugung einer violetten Färbung von Eiern, wird Karmin vorteilhafter Weise eingesetzt in Mischungen mit Patentblau V. Karmin wird zur Erzeugung einer violetten Färbung eingesetzt in einer Menge in einem Bereich von etwa 1,1 Gew.-% bis etwa 5 Gew.-%, weiter bezogen in eine Menge von etwa 1,3 Gew.-% bis etwa 4 Gew.-%, jeweils bezogen auf die Gesamtmenge der erfindungsgemäßen Eierfärbemittelzusammensetzung.

Brillantblau FCF wird als mindestens ein Farbstoff in der erfindungsgemäßen pulverförmigen Eierfärbemittelzusammensetzung eingesetzt, insbesondere zur Erzielung blauer Färbung. Eine blaue Färbung kann auch erzielt werden durch den Einsatz von Patentblau V als mindestens ein Farbstoff in der erfindungsgemäßen Eierfärbemittelzusammensetzung. Brillantblau FCF ist in der Europäischen Union zugelassen unter der Bezeichnung E133 zum Zeitpunkt der Anmeldung der vorliegenden Erfindung. Brillantblau FCF wird unter der CAS-Nr. 3844-45-9 geführt. Chemisch wird Brillantblau FCF bezeichnet als Dihydrogen(ethyl)[4-[4-[ethyl-(3-sulfonatobenzyl)]amino]-2'-sulfonato-benzydryliden]-cyclohexa-2,5-dien-1-yli-den]-(3-sulfonatobenzyl)ammonium-Dinatriumsalz. Brillantblau FCF wird vorzugsweise zur Erzielung einer blauen Färbung von Eiern eingesetzt in einer Menge in einem Bereich von etwa 0,4 Gew.-% bis etwa 2,5 Gew.-%, weiter bevorzugt in einer Menge in einem Bereich von etwa 0,7 Gew.-% bis etwa 2 Gew.-%, jeweils bezogen auf die Gesamtmenge der erfindungsgemäßen Eierfärbemittelzusammensetzung. Es kann auch eingesetzt werden zur Erzielung einer violetten Färbung, dann bevorzugt in Mischung mit Karmin. Soweit eine violette Färbung erwünscht ist, wird Brillantblau FCF eingesetzt in einer Menge in einem Bereich von etwa 0,08 Gew.-% bis etwa 0,8 Gew.-%, bevorzugt in einer Menge in einem Bereich von etwa 0,12 Gew.-% bis etwa 0,4 Gew.-%, jeweils bezogen auf die Gesamtmenge der erfindungsgemäßen Eierfärbemittelzusammensetzung. Brillantblau FCF kann auch eingesetzt werden zur Erzielung einer grünen Färbung, bevorzugt in Mischung mit Riboflavin-5'-Phosphat. Brillantblau FCF wird zur Erzielung einer grünen Färbung vorzugsweise eingesetzt in einer Menge in einem Bereich von etwa 0,16 Gew.-% bis etwa 1 Gew.-%, bevorzugt in einer Menge in einem Bereich von etwa 0,2 Gew.-% bis etwa 0,8 Gew.-%, jeweils bezogen auf die Gesamtmenge der erfindungsgemäßen Eierfärbemittelzusammensetzung.

Patentblau V kann als mindestens ein Farbstoff in der pulverförmigen Eierfärbemittelzusammensetzung eingesetzt werden, insbesondere zur Erzielung einer blauen, grünen oder violetten Färbung, entsprechend Brillantblau FCF. Patentblau V ist in der Europäischen Union zugelassen unter der Bezeichnung E131 zum Zeitpunkt der Anmeldung der vorliegenden Erfindung. Es wird unter der CAS-Nr. 20262-76-4 als Natriumsalz und unter der CAS-Nr. 3536-49-0 als Calciumsalz geführt. Die chemische Bezeichnung lautet 4-[4,4'-Bis(diethylamino)-α-hydroxy-benzhydryl]-6-hydroxy-benzol-1,3-disulfonsäure. Es wird vorzugsweise in den gleichen Mengen und in den gleichen Mischungen eingesetzt wie Brillantblau FCF, wie vorstehend dargelegt.

Die mindestens eine Säure, wobei Zitronensäure ausgenommen ist, ist vorzugsweise in einer Menge in einem Bereich von etwa 5 Gew.-% bis etwa 66 Gew.-%, weiter bevorzugt in einer Menge in einem Bereich von etwa 6 Gew.-% bis etwa 63 Gew.-%, noch weiter bevorzugt etwa 10 Gew.-% bis etwa 66 Gew.-%, und noch weiter bevorzugt etwa 12 Gew.-% bis etwa 65 Gew.-%, jeweils bezogen auf die Gesamtmenge der Zusammensetzung, von der erfindungsgemäßen Zusammensetzung umfasst. Soweit als mindestens eine Säure Zitronensäure eingesetzt ist, ist diese bevorzugt zur Erzielung einer blauen Färbung von Eiern, insbesondere in Kombination mit Brillantblau FCF und/oder Patentblau V, eingesetzt. Die Zitronensäure ist erfindungsgemäß in einer Menge in einem Bereich von etwa 25 Gew.-% bis etwa 50 Gew.-%, weiter bevorzugt in einer Menge in einem Bereich von etwa 30 Gew.-% bis etwa 42 Gew.-%, jeweils bezogen auf die Gesamtmenge der erfindungsgemäßen Eierfärbemittelzusammensetzung, von dieser umfasst. Soweit als mindestens eine Säure Äpfelsäure eingesetzt ist, ist diese bevorzugt zur Erzielung einer roten oder violetten Färbung eingesetzt, insbesondere in Kombination mit Karmin, Riboflavin-5'-Phosphat, Patentblau V und/oder Brillantblau FCF, insbesondere zur Erzielung von roten beziehungsweise violetten Färbungen auf Eiern. Äpfelsäure ist bevorzugt in einer Menge in einem Bereich von etwa 3 Gew.-% bis etwa 10 Gew.-%, bezogen auf die Gesamtmenge der erfindungsgemäßen Eierfärbemittelzusammensetzung, von dieser umfasst, soweit eine violette Färbung gewünscht ist. Soweit eine rote Färbung von Eiern gewünscht ist, ist Äpfelsäure bevorzugt in einer Menge in einem Bereich von etwa 8 Gew.-% bis etwa 30 Gew.-%, weiter bevorzugt in einer Menge in einem Bereich von etwa 10 Gew.-% bis etwa 28 Gew.-%, jeweils bezogen auf die Gesamtmenge der erfindungsgemäßen Eierfärbemittelzusammensetzung, von dieser umfasst. Wird eine rote Färbung von Eiern gewünscht unter Kombination von Karmin und Riboflavin-5'-Phosphat, so ist Äpfelsäure bevorzugt in einer Menge in einem Bereich von etwa 8 Gew.-% bis etwa 20 Gew.-%, weiter bevorzugt etwa 10 Gew.-% bis etwa 19 Gew.-%, jeweils bezogen auf die erfindungsgemäße Eierfärbemittelzusammensetzung, von dieser umfasst. Soweit Karmin allein zur Erzeugung einer roten Färbung eingesetzt wird, ist Äpfelsäure vorzugsweise in einer Menge in einem Bereich von etwa 20 Gew.-% bis etwa 30 Gew.-%, bezogen auf die Gesamtmenge der erfindungsgemäßen Eierfärbemittelzusammensetzung, von dieser umfasst.

Dehydroascorbinsäure und/oder Ascorbinsäure kann als mindestens eine Säure in der erfindungsgemäßen pulverförmigen Eierfärbemittelzusammensetzung eingesetzt werden, insbesondere zur Erzielung einer roten, gelben, grünen und/oder orangen Färbung von Eiern. Ascorbinsäure und/oder Dehydroascorbinsäure ist eingesetzt in einer Menge in einem Bereich von etwa 3 Gew.-% bis etwa 63 Gew.-%, bezogen auf die Gesamtmenge der erfindungsgemäßen Eierfärbemittelzusammensetzung. Soweit Dehydroascorbinsäure und/oder Ascorbinsäure eingesetzt sind, werden diese vorteilhafter Weise zur Erzielung einer roten, gelben und/oder orangen Färbung eingesetzt in einer Menge in einem Bereich von etwa 3 Gew.-% bis etwa 12 Gew.-%, weiter bevorzugt in einer Menge in einem Bereich von etwa 4 Gew.-% bis etwa 9 Gew.-%, noch weiter bevorzugt in einer Menge in einem Bereich von etwa 4,2 Gew.-% bis etwa 7,2 Gew.-%, jeweils bezogen auf die Gesamtmenge der erfindungsgemäßen Eierfärbemittelzusammensetzung. Soweit Dehydroascorbinsäure und/oder Ascorbinsäure eingesetzt sind zur Erzielung einer grünen Färbung, sind diese eingesetzt in einer Menge in einem Bereich von etwa 50 Gew.-% bis etwa 63 Gew.-%, bezogen auf die Gesamtmenge der erfindungsgemäßen Eierfärbemittelzusammensetzung.

Soweit Weinsäure als mindestens eine Säure von der pulverförmigen Eierfärbemittelzusammensetzung umfasst ist, ist diese bevorzugt zur Erzielung einer blauen Färbung von Eiern eingesetzt. Weinsäure ist vorzugsweise in einer Menge in einem Bereich von etwa 20 Gew.-% bis etwa 50 Gew.-%, bevorzugt in einer Menge in einem Bereich von etwa 28 Gew.-% bis etwa 45 Gew.-%, jeweils bezogen auf die Gesamtmenge der erfindungsgemäßen Eierfärbemittelzusammensetzung, von dieser umfasst. Vorteilhafter Weise werden diese Mengen eingesetzt in Kombination mit den Farbstoffen Patentblau V oder Brillantblau FCF in Mengen wie weiter oben beschrieben.

Erfindungsgemäß wird als Zucker Saccharose eingesetzt. Zur Erzielung einer roten Färbung von Eiern ist Zucker eingesetzt in einer Menge in einem Bereich von etwa 40 Gew.-% bis etwa 70 Gew.-%, weiter bevorzugt in einer Menge in einem Bereich von etwa 50 Gew.-% bis etwa 70 Gew.-%, jeweils bezogen auf die Gesamtmenge der erfindungsgemäßen Eierfärbemittelzusammensetzung. Soweit Zucker eingesetzt ist zur Erzielung einer gelben Färbung von Eiern ist dieser eingesetzt in einer Menge in einem Bereich von etwa 70 Gew.-% bis etwa 92 Gew.-%, weiter bevorzugt in einer Menge in einem Bereich von etwa 85 Gew.-% bis etwa 91,5 Gew.-%, weiter bevorzugt in einer Menge in einem Bereich von etwa 87,5 Gew.-% bis etwa 91,5 Gew.-%, jeweils bezogen auf die Gesamtmenge der erfindungsgemäßen Eierfärbemittelzusammensetzung. Soweit Zucker eingesetzt ist zur Erzielung einer grünen Färbung von Eiern, ist dieser eingesetzt in einer Menge in einem Bereich von etwa 25 Gew.-% bis etwa 40 Gew.-%, weiter bevorzugt in einer Menge in einem Bereich von etwa 28 Gew.-% bis etwa 38 Gew.-%, jeweils bezogen auf die Gesamtmenge der erfindungsgemäßen Eierfärbemittelzusammensetzung. Soweit Zucker eingesetzt ist zur Erzielung einer blauen Färbung, ist Zucker eingesetzt in einer Menge in einem Bereich von etwa 40 Gew.-% bis etwa 70 Gew.-%, weiter bevorzugt in einer Menge in einem Bereich von etwa 50 Gew.-% bis etwa 70 Gew.-%, jeweils bezogen auf die Gesamtmenge der erfindungsgemäßen Eierfärbemittelzusammensetzung. Soweit Zucker eingesetzt ist zur Erzielung einer orangen Färbung von Eiern, ist dieser eingesetzt in einer Menge in einem Bereich von etwa 70 Gew.-% bis etwa 92 Gew.-%, bevorzugt in einer Menge in einem Bereich von etwa 82 Gew.-% bis etwa 92 Gew.-%, weiter bevorzugt in einer Menge in einem Bereich von etwa 87,5 Gew.-% bis etwa 91,5 Gew.-%, jeweils bezogen auf die Gesamtmenge der erfindungsgemäßen Eierfärbemittelzusammensetzung. Soweit Zucker eingesetzt ist zur Erzielung einer violetten Färbung von Eiern, ist dieser eingesetzt in einer Menge in einem Bereich von etwa 80 Gew.-% bis etwa 93 Gew.-%, weiter bevorzugt in einer Menge in einem Bereich von etwa 88 Gew.-% bis etwa 92 Gew.-%, noch weiter bevorzugt in einer Menge in einem Bereich von etwa 88,5 Gew.-% bis etwa 91,8 Gew.-%, jeweils bezogen auf die Gesamtmenge der erfindungsgemäßen Eierfärbemittelzusammensetzung. Erfindungsgemäß ist in den vorgenannten Gew.-%-Bereichen als Zucker eingesetzt ausschließlich Saccharose.

Vorzugsweise umfasst die erfindungsgemäße pulverförmige Eierfärbemittelzusammensetzung kein Konservierungsmittel. Weiter bevorzugt umfasst die erfindungsgemäße pulverförmige Eierfärbemittelzusammensetzung mindestens ein Abfüllhilfsmittel. Das mindestens ein Abfüllhilfsmittel ist dabei vorteilhafter Weise ausgewählt aus der Gruppe der Polysorbate und ist besonders bevorzugt Polysorbat 80 (E 433). Auch andere flüssige Lebensmittelzusatzstoffe, wie Glycerin, sind einsetzbar. Die erfindungsgemäße pulverförmige Eierfärbemittelzusammensetzung kann weiterhin in geringer Menge mindestens ein Sprühhilfsmittel umfassen, insbesondere ein solches ausgewählt aus der Reihe der niedermolekularen Alkohole, besonders bevorzugt Ethanol und/oder Methanol, weiter bevorzugt Ethanol. Das mindestens eine Abfüllhilfsmittel und das mindestens eine Sprühhilfsmittel sind vorzugsweise in einer Menge in einem Bereich von etwa 0,1 Gew.-% bis etwa 0,6 Gew.-%, weiter bevorzugt in einer Menge in einem Bereich von etwa 0,2 Gew.-% bis etwa 0,4 Gew.-%, jeweils bezogen auf die Gesamtmenge der erfindungsgemäßen Eierfärbemittelzusammensetzung, jeweils von dieser umfasst. Weiter bevorzugt ist die erfindungsgemäße Zusammensetzung pufferfrei. Dies bedeutet, dass eine Abpufferung des pH-Wertes in der pulverförmigen Eierfärbemittelzusammensetzung zum Färben von Eiern nicht notwendig ist. Es kann jedoch durchaus auch vorgesehen sein, mindestens ein Puffermittel einzusetzen.

Eine besonders bevorzugte pulverförmige Eierfärbemittelzusammensetzung, welche als alleinigen Farbstoff Karmin umfasst, umfasst Karmin in einer Menge in einem Bereich von etwa 3 Gew.-% bis etwa 10 Gew.-%, Äpfelsäure in einer Menge in einem Bereich von etwa 20 Gew.-% bis etwa 30 Gew.-%, Zucker in Form von Saccharose, in einem Bereich von etwa 55 Gew.-% bis etwa 65 Gew.-% sowie darüber hinaus eventuell mindestens ein Abfüllhilfsmittel und/oder mindestens ein Sprühhilfsmittel in einer Menge in einem Bereich von etwa 0,2 Gew.-% bis etwa 0,4 Gew.-%, aber kein Konservierungsmittel, wobei die vorgenannten Angaben jeweils bezogen sind auf die Gesamtmenge der erfindungsgemäßen Zusammensetzung.

Soweit zur Erzielung einer roten Färbung eine Mischung aus Riboflavin-5'-Phosphat und Karmin eingesetzt wird, umfasst eine erfindungsgemäße Eierfärbemittelzusammensetzung etwa 2,7 Gew.-% bis etwa 5 Gew.-% Riboflavin-5'-Phosphat, etwa 3 Gew.-% bis etwa 6 Gew.-% Karmin, etwa 10 Gew.-% bis etwa 20 Gew.-% Äpfelsäure, etwa 62 Gew.-% bis etwa 78 Gew.-% Zucker in Form von Saccharose, sowie gegebenenfalls 0,2 Gew.-% bis etwa 0,4 Gew.-% mindestens eines Abfüllhilfsmittels und/oder mindestens eines Sprühhilfsmittels, aber kein Konservierungsmittel, jeweils bezogen auf die Gesamtmenge der erfindungsgemäßen Zusammensetzung.

Zur Erzielung einer gelben Färbung von Eiern wird eine pulverförmige Eierfärbemittelzusammensetzung vorgeschlagen, umfassend etwa 2,5 Gew.-% bis etwa 5 Gew.-% Riboflavin-5'-Phosphat, etwa 4 Gew.-% bis etwa 9 Gew.-%, bevorzugt etwa 4,2 Gew.-% bis etwa 7,5 Gew.-%, Ascorbinsäure, Äpfelsäure und/oder Zitronensäure, wobei besonders bevorzugt Ascorbinsäure ist, etwa 85 Gew.-% bis etwa 92 Gew.-%, bevorzugt 87,5 Gew.-% bis etwa 91,5 Gew.-%, eines Zuckers in Form von Saccharose, als auch ggf. mindestens ein Abfüllhilfsmittel und/oder mindestens ein Sprühhilfsmittel in einer Menge in einem Bereich von etwa 0,2 Gew.-% bis etwa 0,4 Gew.-%, aber kein Konservierungsmittel, wobei die Gew.-%-Angaben jeweils bezogen sind auf die Gesamtmenge der erfindungsgemäßen Zusammensetzung.

Soweit eine grüne Färbung mittels der pulverförmigen Eierfärbemittelzusammensetzung gewünscht ist, umfasst diese etwa 2,5 Gew.-% bis etwa 5 Gew.-% Riboflavin-5'-Phosphat, etwa 0,2 Gew.-% bis etwa 0,8 Gew.-% Patentblau V und/oder Brillantblau FCF, etwa 55 Gew.-% bis etwa 68 Gew.-% Ascorbinsäure, etwa 28 Gew.-% bis etwa 38 Gew.-% eines Zuckers in Form von Saccharose, als auch gegebenenfalls mindestens ein Abfüllhilfsmittel und/oder mindestens ein Sprühhilfsmittel in einer Menge in einem Bereich von etwa 0,2 Gew.-% bis etwa 0,4 Gew.-%, aber kein Konservierungsmittel, wobei die Gew.-%-Angaben jeweils bezogen sind auf die Gesamtmenge der erfindungsgemäßen Zusammensetzung.

Soweit eine blaue Färbung gewünscht ist, wird eine pulverförmige Eierfärbemittelzusammensetzung vorgeschlagen, umfassend etwa 0,7 Gew.-% bis etwa 2 Gew.-% Patentblau V und/oder Brillantblau FCF, etwa 25 Gew.-% bis etwa 45 Gew.-% mindestens einer Säure ausgewählt aus einer Gruppe umfassend Zitronensäure, Äpfelsäure, Dehydroascorbinsäure und/oder Ascorbinsäure, bevorzugt ausschließlich Zitronensäure, einen Zucker in Form von Saccharose, in einem Bereich von etwa 40 Gew.-% bis etwa 75 Gew.-%, bevorzugt etwa 55 Gew.-% bis etwa 75 Gew.-%, sowie gegebenenfalls mindestens ein Abfüllmittel und/oder mindestens ein Sprühhilfsmittel in einer Menge in einem Bereich von etwa 0,08 Gew.-% bis etwa 0,25 Gew.-%, aber kein Konservierungsmittel, wobei die Gew.-% -Angaben jeweils bezogen sind auf die Gesamtmenge der erfindungsgemäßen Eierfärbemittelzusammensetzung.

Soweit eine orange Färbung durch die erfindungsgemäße pulverförmige Eierfärbemittelzusammensetzung gewünscht ist, umfasst diese etwa 2,5 Gew.-% bis etwa 5 Gew.-% Riboflavin-5'-Phosphat, etwa 0,15 Gew.-% bis etwa 0,8 Gew.-% Karmin, etwa 0,4 Gew.-% bis etwa 10 Gew.-%, bevorzugt etwa 0,6 Gew.-% bis etwa 7,8 Gew.-%, mindestens einer Säure, ausgewählt aus einer Gruppe umfassend Ascorbinsäure, Zitronensäure, Dehydroascorbinsäure und/oder Ascorbinsäure, wobei Ascorbinsäure bevorzugt ist, und einen Zucker in einer Menge in einem Bereich von etwa 85 Gew.-% bis etwa 92 Gew.-%, bevorzugt etwa 87,5 Gew.-% bis etwa 91,5 Gew.-%, wobei der Zucker Saccharose ist, sowie gegebenenfalls in etwa 0,2 Gew.-% bis etwa 0,4 Gew.-% mindestens eines Abfüllhilfsmittels und/oder Sprühhilfsmittels, aber kein Konservierungsmittel, wobei die Gew.-%-Angaben jeweils bezogen sind auf die Gesamtmenge der erfindungsgemäßen Eierfärbemittelzusammensetzung.

Soweit eine violette Färbung mittels der pulverförmigen Eierfärbemittelzusammensetzung gewünscht ist, umfasst diese bevorzugt in etwa 1 Gew.-% bis etwa 4 Gew.-% Karmin, etwa 0,1 Gew.-% bis etwa 0,3 Gew.-% Patentblau V und/oder Brillantblau FCF, etwa 4 Gew.-% bis etwa 10 Gew.-%, bevorzugt etwa 4,2 Gew.-% bis etwa 7,8 Gew.-%, Äpfelsäure, etwa 88 Gew.-% bis etwa 92 Gew.-%, bevorzugt etwa 88,5 Gew.-% bis etwa 91,8 Gew.-%, eines Zuckers in Form von Saccharose, als auch gegebenenfalls mindestens ein Abfüllhilfsmittel und/oder Sprühhilfsmittel in einer Menge von in einem Bereich von jeweils 0,08 Gew.-% bis etwa 0,3 Gew.-%, aber kein Konservierungsmittel, wobei die Gew.-% -Angaben jeweils bezogen sind auf die Gesamtmenge der erfindungsgemäßen Zusammensetzung.

Die vorliegende Erfindung betrifft weiterhin die Verwendung einer erfindungsgemäßen pulverförmigen Eierfärbemittelzusammensetzung wie vorstehend beschrieben zum Färben von Eiern in wässriger Lösung mit einer Temperatur in einem Bereich von etwa 5°C bis etwa 30°C, weiter bevorzugt mit einer Temperatur in einem Bereich von etwa 15°C bis etwa 28°C.

Die vorliegende Erfindung wird anhand der nachfolgenden Mischungen und Versuche näher erläutert. Es zeigt:

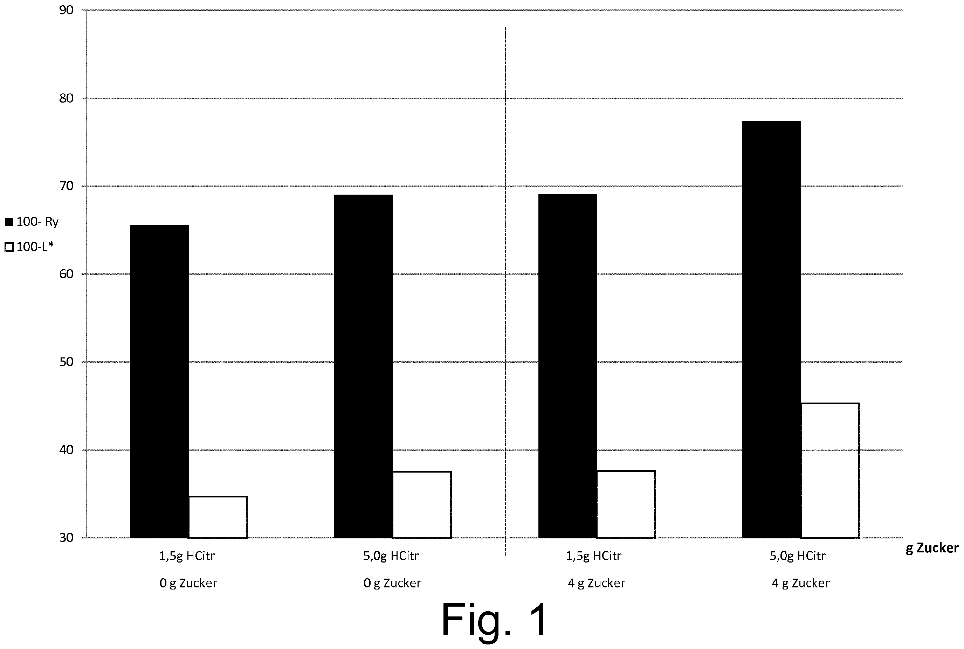

- Fig. 1:: Messung der Helligkeit als auch des Chroma-Wertes betreffend den Einfluss von Zucker auf blaufärbende erfindungsgemäße Eierfärbemittelzusammensetzungen mit Brillantblau FCF.

Die in der folgenden Tabelle angegebenen erfindungsgemäßen Eierfärbemittelzusammensetzungen ergaben hervorragende gleichmäßige, nahezu fleckenfreie und in ihrer Intensität sehr gute Färbungen auf Eiern, wobei bei den Farbstoffen abgestellt wird auf die Gesamtmenge die Mischung dieser mit sonstigen handelsüblichen Zusätzen in Abweichung von den Angaben oben.

| | **Eier-Farbe Rot I [Gew.-%]** | **Eier-Farbe Rot II [Gew.-%]** | **Eier-Farbe Gelb [Gew.-%]** | **Eier-Farbe Grün [Gew.-%]** | **Eier-Farbe Blau [Gew.-%]** | **Eier-Farbe Orange [Gew.-%]** | **Eier-Farbe Violett [Gew.-%]** |
|---|---|---|---|---|---|---|---|
| **Saccharose** | 59,5 | 69,25 | 89,25 | 32,55 | 61,05 | 88,65 | 90,3 |
| **Zitronensäure** | | | | | 37,5 | | |
| **Äpfelsäure** | 25 | 12,5 | | | | | 6,25 |
| **Ascorbinsäure** | | 6,25 | 6,25 | 62,5 | | 6,25 | |
| **Abfüllhilfsmittel** | 0,25 | 0,25 | 0,25 | 0,25 | 0,125 | 0,25 | 0,125 |
| **Sprühhilfsmittel** | 0,25 | 0,25 | 0,25 | 0,25 | 0,125 | 0,25 | 0,125 |
| **Riboflavin-5'-Phosphat (95%ig)** | | 4 | 4 | 4 | | 4 | |
| **Karmin (50%ig)** | 15 | 7,5 | | | | 0,6 | 3 |
| **Patentblau V (85%ig)** | | | | 0,45 | 1,2 | | 0,2 |

Darüber hinaus wurde eine pulverförmige Eierfärbemittelzusammensetzung mit 3 Gew.-% einer Mischung mit 85% Brillantblau FCF und 97 Gew.-% Zitronensäure, als auch eine Mischung mit 1 Gew.-% einer Mischung mit 85% Brillantblau FCF und 99 Gew.-% Zitronensäure, beide Mischungen ohne Zucker, als auch eine Mischung mit 72 Gew.-% Saccharose, 27 Gew.-% Zitronensäure und 1 Gew.-% einer Mischung mit 85% Brillantblau FCF und eine weitere Mischung mit 44 Gew.-% Saccharose, 55 Gew.-% Zitronensäure und 1 Gew.-% einer Mischung mit 85% Brillantblau FCF hergestellt und mittels eines Spektralphotometers SPECTRAFLASH SF600X der Datacolor AG mit diesen Zusammensetzungen gefärbte Eier gemessen. Die Färbung erfolgte bei einer Temperatur von 20°C über einen Zeitraum von 10 Minuten. Es wurden Werte für die Helligkeit (Ry-Wert) als auch der Chroma-Wert L* gemessen. Die Messung wurde mit einer Blende von 9 mm durchgeführt. Ermittelt wurde dabei die Remission über den gesamten sichtbaren Bereich des Lichtes im Vergleich zu einem Weiß-Standard, der 100% Remission entspricht. Zur Ermittlung der Werte wurden dann von 100% die gemessene Remission abgezogen, so dass das Balkendiagramm gemäß Fig. 1 die Absorption im Vergleich zum Weiß-Standard zeigt, was der empfundenen Farbtiefe entspricht.

Die Ergebnisse sind in Fig. 1 gezeigt. Deutlich zeigt sich der positive Einfluss von Zucker sowohl auf die Helligkeit als auch auf die Chroma-Werte bei den untersuchten Werten im Vergleich zu solchen, welche keinen Zucker enthielten.

Mittels der erfindungsgemäßen pulverförmigen Eierfärbezusammensetzung ist es möglich, Eier insbesondere in Hinblick auf die Farbintensität, aber auch Gleichmäßigkeit beziehungsweise Homogenität der Färbung und insbesondere in Hinblick auf die Vermeidung von hellen Sprenkeln zu färben, so dass ein verbessertes Färbebild entsteht.

## Patentansprüche

1. Pulverförmige Eierfärbemittelzusammensetzung umfassend: mindestens einen Farbstoff ausgewählt aus einer Gruppe umfassend Riboflavin-5'-Phosphat, Karmin, Brillantblau-FCF und/oder Patentblau V in einer Menge in einem Bereich von 0,8 Gew.-% bis 15 Gew.-%, bezogen auf die Gesamtmenge der Zusammensetzung; mindestens eine Säure ausgewählt aus einer Gruppe umfassend Zitronensäure in einer Menge in einem Bereich von 25 Gew.-% bis 50 Gew.-%, bezogen auf die Gesamtmenge der erfindungsgemäßen Eierfärbemittelzusammensetzung, Äpfelsäure, Weinsäure, Dehydroascorbinsäure und/oder Ascorbinsäure; sowie Saccharose in einer Menge in einem Bereich von 25 Gew.-% bis 94 Gew.-%, bezogen auf die Gesamtmenge der Zusammensetzung.

2. Zusammensetzung gemäß Anspruch 1, **dadurch gekennzeichnet, dass** die mindestens eine Säure, wobei Zitronensäure ausgenommen ist, in einer Menge in einem Bereich von 5 Gew.-% bis 66 Gew.-%, bezogen auf Gesamtmenge der Zusammensetzung, von der Zusammensetzung umfasst ist.

3. Zusammensetzung gemäß einem oder mehreren der vorhergehenden Ansprüche, **dadurch gekennzeichnet, dass** diese mindestens ein Abfüllhilfsmittel umfasst.

4. Zusammensetzung gemäß einem oder mehreren der vorhergehenden Ansprüche, **dadurch gekennzeichnet, dass** diese pufferfrei ist.

5. Verwendung einer pulverförmigen Eierfärbemittelzusammensetzung gemäß einem oder mehreren der Ansprüche 1 bis 4 zum Färben von Eiern in wässriger Lösung mit einer Temperatur in einem Bereich von 5°C bis 30°C.

## Claims

1. Powdery composition for coloring eggs comprising: at least one dye selected from a group comprising riboflavin-5'-phosphate, carmine, brilliant blue FCF and/or patent blue V in an amount ranging from 0.8 % to 15 % by weight, based on the total amount of said composition; at least one acid selected from a group comprising citric acid in an amount ranging from 25 % by weight to 50 % by weight, based on the total amount of said composition for coloring eggs according to the invention, malic acid, tartaric acid, dehydroascorbic acid and/or ascorbic acid; as well as saccharose in an amount ranging from 25 % by weight to 94 % by weight, based on the total amount of said composition.

2. Composition according to claim 1, **characterized in that** said at least one acid, citric acid being excluded, is comprised by said composition in an amount ranging from 5% to 66% by weight, based on the total amount of said composition.

3. Composition according to one or more of the preceding claims, **characterized in that** it comprises at least one filling aid.

4. Composition according to one or more of the preceding claims, **characterized in that** it is buffer-free.

5. Use of a powdery composition for coloring eggs according to one or more of the claims 1 to 4, for coloring eggs in an aqueous solution with a temperature ranging from 5°C to 30°C.

## Revendications

1. Composition poudreuse de colorant pour oeufs comprenant: au moins un colorant choisi dans un groupe comprenant phosphate 5' de riboflavine, carmin, bleu brillant FCF et/ou bleu patenté V en une quantité comprise entre 0,8 % en poids et 15 % en poids, par rapport au poids total de ladite composition; au moins un acide choisi dans un groupe comprenant d'acide citrique en une quantité comprise entre 25% en poids et 50 % en poids par rapport au poids total de ladite composition de colorant pour oeufs selon l'invention, d'acide malique, d'acide tartrique, d'acide déshydroascorbique et/ou d'acide ascorbique; et de saccharose en une quantité comprise entre 25 % en poids et 94 % en poids, par rapport au poids total de ladite composition.

2. Composition selon la revendication 1, **caractérisée en ce que** ledit au moins un acide, à l'exclusion dudit acide citrique, est compris dans ladite composition dans une quantité comprise entre 5 % en poids et 66 % en poids, par rapport au poids total de ladite composition.

3. Composition selon une ou plusieurs des revendications précédentes, **caractérisée en ce qu'**elle contient au moins un excipient de charge.

4. Composition selon une ou plusieurs des revendications précédentes, **caractérisée en ce qu'**elle ne contient pas de tampon.

5. Utilisation d'une composition poudreuse de colorant pour oeufs selon une ou plusieurs des revendications 1 à 4 pour colorer des oeufs dans une solution aqueuse à une température comprise entre 5°C et 30°C.
